# EUROPÄISCHE PATENTSCHRIFT

(11) **EP 3 974 208 B1**
(45) Veröffentlichungstag und Bekanntmachung des Hinweises auf die Patenterteilung: **26.07.2023**
(21) Anmeldenummer: 21194469.9
(22) Anmeldetag: 02.09.2021
(51) Int. Cl.: B60C 11/03, B60C 11/04, B60C 11/13

(54) **FAHRZEUGREIFEN**
VEHICLE TYRES
PNEUS DE VÉHICULE

(30) Priorität: 24.09.2020 DE 102020211972
(43) Veröffentlichungstag der Anmeldung: 30.03.2022
(73) Patentinhaber: Continental Reifen Deutschland GmbH, 30165 Hannover (DE)
(72) Erfinder: Kristen, Florian, 30165 Hannover (DE); Lutz, André, 30165 Hannover (DE)
(74) Vertreter: Continental Corporation

(56) Entgegenhaltungen:
- EP-A1- 1 782 970
- EP-A1- 3 492 283
- EP-A1- 3 888 948
- WO-A1-2010/030276
- US-A- 2 843 172
- US-A- 3 534 798

## Beschreibung

Die Erfindung betrifft einen Fahrzeugreifen mit einer radial außenseitig und in einer Umfangsrichtung des Fahrzeugreifens umlaufend ausgebildeten Lauffläche und in der Lauffläche in Umfangsrichtung eingebrachten Umfangsrillen, die im Querschnitt betrachtet einen radial äußeren Bereich und einen daran anschließenden radial inneren Bereich aufweisen, wobei die Rillenbreite im radial äußeren Bereich geringer ausgeführt ist als im radial inneren Bereich.

Fahrzeugreifen der eingangs genannten Art sind vielfältig bekannt und verfügen im Bereich ihrer Lauffläche über eine Profilierung, die unter anderem in Umfangsrichtung eingebrachte Umfangsrillen umfasst. Neben Umfangsrillen mit einem im wesentlichen U-förmigen Querschnitt konstanter Rillenbreite sind im Stand der Technik auch sogenannte Void Generating Grooves (VGG) bekannt, wobei es sich um Umfangsrillen handelt, die radial von außen nach innen betrachtet eine sich ändernde Rillenbreite aufweisen, dahingehend, dass diese im radial äußeren Bereich geringer ausgeführt ist als im radial inneren Bereich. Mit steigendem Abrieb des Fahrzeugreifens infolge seiner Nutzung soll somit gegen Ende des Reifenlebens mehr Negativanteil durch die sich vergrößernde Rillenbreite zur Verfügung gestellt werden, damit noch genügend Nassgriff vorhanden ist. Andererseits ist zu Beginn der Reifennutzung die Umfangsrille sehr schmal, wodurch ein geringer Rollwiderstand erreicht wird. Problematisch ist jedoch, dass zu Beginn der Reifennutzung infolge der nur geringen Rillenbreite der Umfangsrille die Nassgriffeigenschaften des Reifens vermindert sind, da sich die Umfangsrille aufgrund des auf der Lauffläche lastenden Fahrzeuggewichts sowie der dynamischen Lasten im Bereich der Aufstandsfläche (Footprint) schließt.

In der US 2843172 A wird ein Fahrzeugreifen mit einer radial außenseitig und in einer Umfangsrichtung des Fahrzeugsreifens umlaufend ausgebildeten Lauffläche und in der Lauffläche in Umfangsrichtung eingebrachten Umfangsrillen, die im Querschnitt betrachtet einen radial äußeren Bereich und einen daran anschließenden radial inneren Bereich aufweisen, wobei die Rillenbreite im radial äußeren Bereich geringer ausgeführt ist als im radial inneren Bereich, wobei der radial äußere Bereich in Umfangsrichtung betrachtet einen zickzackförmigen Verlauf aus aneinander anschließenden Streckenabschnitten aufweist, offenbart.

Aufgabe der Erfindung ist es daher, einen Fahrzeugreifen der eingangs genannten Art vorzuschlagen, der bereits zu Beginn des Reifenlebens bei noch geringer Rillenbreite der Umfangsrille verbesserte Nassgriffeigenschaften aufweist.

Zur Lösung der gestellten Aufgabe wird erfindungsgemäß die Ausgestaltung eines Fahrzeugreifens gemäß den Merkmalen des Patentanspruches 1 vorgeschlagen.

Vorteilhafte Ausgestaltungen und Weiterbildungen der Erfindung sind Gegenstand der abhängigen Ansprüche.

Der erfindungsgemäße Vorschlag sieht vor, dass der radial äußere Bereich der Umfangsrille in Umfangsrichtung des Fahrzeugreifens betrachtet einen zickzack-förmigen Verlauf aus aneinander anschließenden, vorzugsweise geraden oder leicht gekrümmten Streckenabschnitten aufweist. Durch den erfindungsgemäßen Ersatz des bislang vorgesehenen schmalen, geradlinig verlaufenden radial äußeren Bereiches der Umfangsrille durch einen zickzack-förmigen Verlauf dieses Bereichs wird die Länge der Griffkanten der Lauffläche signifikant erhöht, wodurch sich ein deutlich verbesserter Nassgriff bei gleichbleibend niedrigem Rollwiderstand einstellt.

Nach einem Vorschlag der Erfindung erstrecken sich aufeinanderfolgende Streckenabschnitte des zickzack-förmigen Verlaufes der Umfangsrille im radial äußeren Bereich stumpfwinklig, vorzugsweise unter einem Winkel von etwa 145 bis 175° zueinander, d. h. dieser Winkel wird zwischen aufeinanderfolgenden Streckenabschnitten eingeschlossen.

Nach einem weiteren Vorschlag der Erfindung weisen die einzelnen Streckenabschnitte jeweils eine Länge von etwa 10 bis 60 Millimeter auf. Diese Dimensionierungen sind jedoch lediglich beispielhaft und können vom Fachmann in Abhängigkeit vom Einsatzzweck des Fahrzeugreifens auch abgewandelt werden.

Um den Nassgriff insbesondere des noch nicht abgenutzten und über seine anfängliche Lauffläche verfügenden Fahrzeugreifen weiter zu optimieren, wird darüber hinaus vorgeschlagen, dass sich der radial äußere Bereich radial einwärts der anfänglichen Lauffläche des nicht abgenutzten Fahrzeugreifen befindet, beispielsweise etwa 1 bis 3 Millimeter radial unterhalb der anfänglichen Lauffläche, wobei ausgehend von der anfänglichen Lauffläche zum radial äußeren Bereich eine im Querschnitt V-förmig ausgebildete und in den radial äußeren Bereich einmündende Einlaufprofilierung vorgesehen ist, die entsprechend vergrößerten Negativanteil im noch nicht abgenutzten Profil der Lauffläche zur Verfügung stellt.

Nach einer weiteren möglichen Ausführungsform der Erfindung sind aufeinanderfolgende Streckenabschnitte im radial äußeren Bereich der Umfangsrille abwechselnd mit größerer und kleinerer Rillenbreite ausgeführt, sodass in Umfangsrichtung betrachtet auf einen Streckenabschnitt mit größerer Rillenbreite ein Streckenabschnitt mit kleinerer Rillenbreite und anschließend wieder ein Streckenabschnitt mit größerer Rillenbreite usw. folgt. Durch eine solche Ausgestaltung wird erreicht, dass sich zwar der Streckenabschnitt mit kleinerer Rillenbreite im Bereich der Aufstellfläche schließt, jedoch der voreilende und nacheilende, jeweils mit größerer Rillenbreite ausgeführte Streckenabschnitt aufgrund der sich einstellenden abstützenden Wirkung geöffnet bleibt und somit eine bessere Abführung von Wasser in der Umfangsrille ermöglicht.

Schließlich wird vorgeschlagen, dass der sich an den radial äußeren Bereich anschließende radial innere Bereich der Umfangsrille im Querschnitt betrachtet etwa trog- oder vasenförmig ausgebildet ist und sich geradlinig in Umfangsrichtung erstreckt, um ausreichend großen Negativanteil im Profil der Lauffläche zur Verfügung zu stellen, wenn der Fahrzeugreifen bereits stärker abgenutzt ist.

Weitere Einzelheiten und Ausgestaltungen der Erfindung werden nachfolgend anhand von Ausführungsbeispielen in der Zeichnung näher erläutert. Es zeigen:
- Figur 1: einen Teilquerschnitt durch die Lauffläche eines erfindungsgemäßen Fahrzeugreifens;
- Figur 2: in perspektivischer vergrößerter Darstellung eine Umfangsrille des Fahrzeugreifens gemäß Figur 1 in einer ersten Ausführungsform;
- Figur 3: in perspektivischer vergrößerter Darstellung eine Umfangsrille des Fahrzeugreifens gemäß Figur 1 in einer zweiten Ausführungsform;
- Figur 4: die Aufsicht auf die Lauffläche gemäß Figur 1 des nicht abgenutzten Fahrzeugreifens;
- Figur 5: die Aufsicht auf die Lauffläche gemäß Figur 1 des teilweise abgenutzten Fahrzeugreifens;
- Figur 6: die Aufsicht auf die Lauffläche gemäß Figur 1 des abgenutzten Fahrzeugreifens zum Ende seiner Lebensdauer.

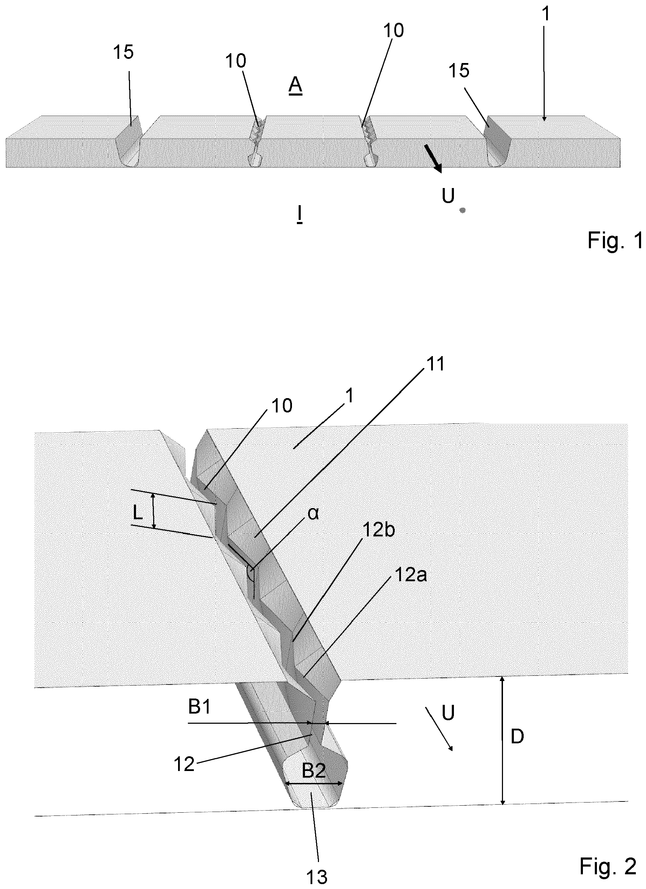

Aus der Figur 1 ist in einer schematischen Darstellung ein Teilbereich der Lauffläche 1 eines Fahrzeugreifens dargestellt, der über ein Profil verfügt, welches unter anderem von in Umfangsrichtung U verlaufenden Umfangsrillen 10 sowie weiteren Längsrillen 15 gebildet wird und darüber hinaus auch noch eine Vielzahl weiterer hier nicht dargestellter Rillen und Profilblöcke umfassen kann.

Während die Längsrillen 15 einfach mit einem im wesentlichen U-förmigen Querschnitt ausgebildet und radial nach außen bis in die anfängliche Lauffläche 1 geöffnet sind, um einen großen Negativanteil zur Verfügung zu stellen, verfügen die Umfangsrillen 10 über einen komplexeren und in näheren Einzelheiten aus der Figur 2 ersichtlichen Querschnitt. Auch die Umfangsrillen 10 sind radial nach außen in die anfängliche Lauffläche 1 des Fahrzeugreifens geöffnet und verlaufen in Umfangsrichtung U.

Wie aus der Figur 2 ersichtlich, sind die Umfangsrillen 10 als sogenannte Void Generating Grooves (VGG) ausgebildet, indem sie durch ihre Querschnittsgestaltung bei verschleißbedingt abnehmender Dicke D der Lauffläche 1 zum Ende des Reifenlebens hin mehr Negativanteil zur Verfügung stellen, um ausreichenden Nassgriff sicherzustellen.

Dazu weist die dargestellte Umfangsrille 10 radial von der Außenseite A zur Innenseite I betrachtet einen radial äußeren Bereich 12 mit einer geringen Rillenbreite B1 von beispielsweise 0,8 bis 2 Millimeter auf, an den sich radial einwärts ein radial innerer Bereich 13 anschließt, der im Querschnitt betrachtet etwa trog- oder vasenförmig ausgebildet ist und insoweit eine gegenüber der Rillenbreite B1 im radial äußeren Bereich 12 vergrößerte Rillenbreite B2 zur Verfügung stellt.

Während der radial innere Bereich 13 sich geradlinig in Umfangsrichtung U erstreckt, verläuft der radial äußere Bereich 12 in Umfangsrichtung U betrachtet zickzack-förmig, indem er aus einzelnen aufeinanderfolgenden geradlinigen kurzen Streckenabschnitten 12a, 12b besteht, die jeweils eine Länge L von etwa 20 Millimeter aufweisen und einen Winkel α von etwa 172° einschließen.

Der radial äußere Bereich 12 ist gegenüber der dargestellten anfänglichen Lauffläche 1 des nicht abgenutzten Fahrzeugreifens radial einwärts versetzt. Ausgehend von der anfänglichen Lauffläche 1 verläuft zum radial äußeren Bereich 12 eine im Querschnitt V-förmig ausgebildete und in den radial äußeren Bereich 12 einmündende Einlaufprofilierung 11, die dem zickzack-förmigen Verlauf des radial äußeren Bereichs 12 über die gesamte Länge des radial äußeren Bereichs 12 in Umfangsrichtung U folgt.

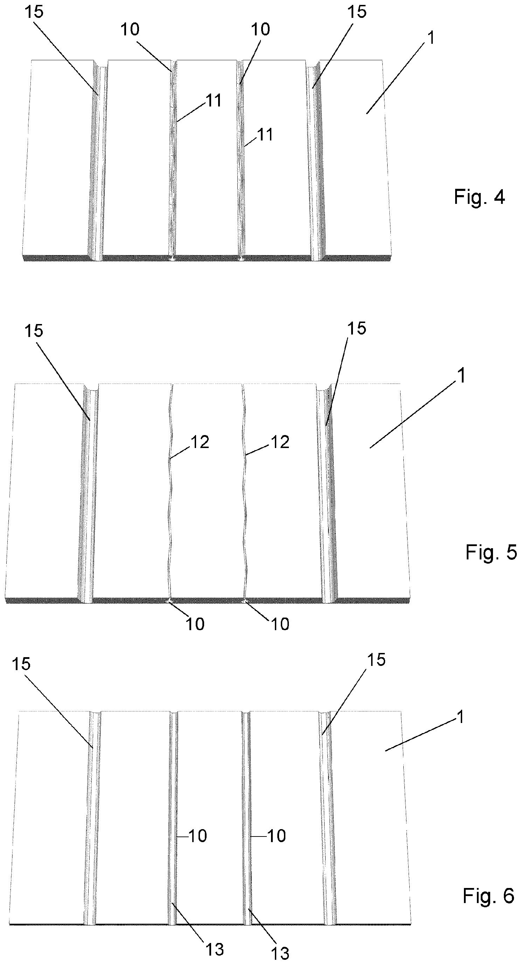

Aufgrund dieser Konfiguration der Längsrillen 10 ergibt sich in verschiedenen, in den Figuren 4 bis 6 dargestellten Verschleißzuständen des Fahrzeugreifens folgendes Bild:
Zu Beginn der Nutzungsdauer, d. h. bei noch nicht abgenutztem Fahrzeugreifen und anfänglicher Lauffläche 1 desselben gemäß Figur 4 sind die Umfangsrillen 10 wie auch die übrigen Längsrillen 15 in ihrer vollen radialen Ausdehnung vorhanden, wobei die Umfangsrillen 10 über die Einlaufprofilierung 11 zugänglich sind. Dementsprechend stellt die Einlaufprofilierung 11 aufgrund ihrer V-förmigen Querschnittsgestaltung mit der im nicht abgenutzten Zustand größten Öffnungsweite einen entsprechend hohen Negativanteil in der Lauffläche 1 zur Verfügung, die für einen guten anfänglichen Nassgriff bei geringem Rollwiderstand verantwortlich ist.

Bei fortschreitendem Reifenverschleiß gemäß Figur 5 und einer allmählichen Abnahme der Dicke D der Lauffläche 1 ist die Einlaufprofilierung 11 abgenutzt und nicht mehr vorhanden, sodass nunmehr der radial äußere Bereich 12 der Umfangsrillen 10 unmittelbar in der Lauffläche endet. Infolge des im radial äußeren Bereich 12 vorgesehenen zickzack-förmigen Verlaufes der aufeinanderfolgenden Streckenabschnitte 12a, 12b wird jedoch eine gegenüber geradlinigem Verlauf in Umfangsrichtung U deutlich vergrößerte Länge der Greifkanten der Umfangsrillen 10 in der Lauffläche 1 bereitgestellt, die einen weiterhin guten Nassgriff bei gleichbleibend niedrigem Rollwiderstand sicherstellt.

Gegen Ende der Reifenlebensdauer und einem Verschleißzustand desselben, wir er in der Figur 6 dargestellt ist, hat sich die Dicke D der Lauffläche 1 so weit verringert, dass auch der radial äußere Bereich 12 abgenutzt ist und nunmehr der radial innere Bereich 13 der Umfangsrillen 10 mit seiner vergrößerten Rillenbreite B2 in der Lauffläche 1 endet und erneut entsprechend vergrößerten Negativanteil in der Lauffläche 1 zur Verfügung stellt, um auch bei diesem fortgeschrittenen Reifenverschleiß weiterhin guten Nassgriff sicherzustellen.

Ein solchermaßen ausgebildeter Fahrzeugreifen erreicht somit über seine gesamte Lebensdauer mit den einhergehenden unterschiedlichen Verschleißzuständen sehr gute und idealerweise konstante Nässehaftung bei geringem Rollwiderstand.

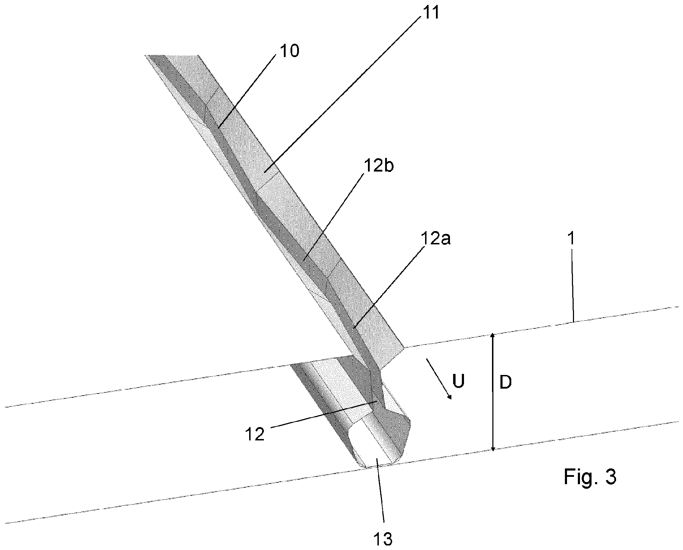

Eine weitere Steigerung der Nassgriffeigenschaften kann dadurch erreicht werden, dass die Profilierung der Umfangsrille 10 gemäß der Darstellung in der Figur 3 modifiziert wird, wobei gleiche Elemente gleiche Bezugszeichen erhalten haben und hier zur Vermeidung von Wiederholungen nicht nochmals gesondert erläutert werden sollen.

Im Unterschied zum Ausführungsbeispiel gemäß der Figur 2 sind im Ausführungsbeispiel gemäß der Figur 3 die Rillenbreiten der zickzackförmig aufeinanderfolgenden Streckenabschnitte 12a, 12b nicht übereinstimmend ausgeführt, sondern die Rillenbreite des Streckenabschnittes 12a ist geringer als die Rillenbreite des nachfolgenden Streckenabschnittes 12b ausgeführt, wobei eine kontinuierlich abwechselnde Folge kleinerer, größerer und wieder kleinerer Rillenbreite usw. bei den aufeinanderfolgenden Streckenabschnitten des radial äußeren Bereichs 12 der Umfangsrille 10 vorgesehen ist. Aufgrund dieser Ausgestaltung kann sich der schmalere Bereich, d. h. derjenige Streckenabschnitt mit der geringeren Rillenbreite, beim Durchlauf durch die Aufstandsfläche infolge des Fahrzeuggewichts und der dynamischen Lasten schließen, wobei der voreilende und nacheilende anschließende Streckenabschnitt mit demgegenüber größerer Rillenbreite aufgrund der abstützenden Wirkung geöffnet bleibt und somit die bessere Abführung von anfallendem Wasser ermöglicht wird.

Die übrige Funktion sowie das Verschleißbild stimmt mit der vorangehend erläuterten Ausführungsformen gemäß Figuren 1, 4, 5 und 6 überein.

Der vorangehend erläuterte Fahrzeugreifen kann beispielsweise für Personenwagen sowie Nutzfahrzeuge Verwendung finden.

### Bezugszeichenliste:

- 1:: Lauffläche
- 10:: Umfangsrille
- 11:: Einlaufprofilierung
- 12:: radial äußerer Bereich
- 12a, 12b:: aufeinanderfolgende Streckenabschnitte
- 13:: radialer innerer Bereich
- 15:: Laufrille

- A:: Außenseite
- B1:: Breite im radial äußeren Bereich
- B2:: Breite im radial inneren Bereich
- I:: Innenseite
- L:: Länge
- U:: Umfangsrichtung

- α:: Winkel

## Patentansprüche

1. Fahrzeugreifen mit einer radial außenseitig und in einer Umfangsrichtung (U) des Fahrzeugreifens umlaufend ausgebildeten Lauffläche (1) und in der Lauffläche (1) in Umfangsrichtung (U) eingebrachten Umfangsrillen (10), die im Querschnitt betrachtet einen radial äußeren Bereich (12) und einen daran anschließenden radial inneren Bereich (13) aufweisen, wobei die Rillenbreite (B1) im radial äußeren Bereich (12) geringer ausgeführt ist als im radial inneren Bereich (13),wobei der radial äußere Bereich (12) in Umfangsrichtung (U) betrachtet einen zickzack-förmigen Verlauf aus aneinander anschließenden Streckenabschnitten (12a, 12b) aufweist, **dadurch gekennzeichnet, dass** aufeinanderfolgende Streckenabschnitte (12a, 12b) abwechselnd eine größere und kleinere Rillenbreite aufweisen.

2. Fahrzeugreifen nach Anspruch 1, **dadurch gekennzeichnet, dass** aufeinanderfolgende Streckenabschnitte (12a, 12b) unter einem Winkel (α) von 145 bis 175 ° zueinander angeordnet sind.

3. Fahrzeugreifen nach einem der Ansprüche 1 oder 2, **dadurch gekennzeichnet, dass** die einzelnen Streckenabschnitte (12a, 12b) eine Länge (L) von 10 bis 60 Millimeter aufweisen.

4. Fahrzeugreifen nach einem der Ansprüche 1 bis 3, **dadurch gekennzeichnet, dass** sich der radial äußere Bereich (12) radial einwärts der anfänglichen Lauffläche (1) des nicht abgenutzten Fahrzeugreifens befindet und ausgehend von der anfänglichen Lauffläche (1) zum radial äußeren Bereich (12) eine im Querschnitt V-förmig ausgebildete und in den radial äußeren Bereich (12) einmündende Einlaufprofilierung (11) vorgesehen ist.

5. Fahrzeugreifen nach einem der Ansprüche 1 bis 4, **dadurch gekennzeichnet, dass** der radial innere Bereich (13) im Querschnitt betrachtet trog- oder vasenförmig ausgebildet ist und sich geradlinig in Umfangsrichtung (U) erstreckt.

## Claims

1. Vehicle tyre having a tread (1) which is formed radially at the outside and so as to run around in a circumferential direction (U) of the vehicle tyre, and having circumferential grooves (10) which are formed in the tread (1) in the circumferential direction (U) and, as viewed in cross section, have a radially outer region (12) and a radially inner region (13), which adjoins said radially outer region, wherein the groove width (B1) in the radially outer region (12) is configured to be smaller than that in the radially inner region (13), wherein, as viewed in the circumferential direction (U), the radially outer region (12) has a zigzag-shaped profile composed of sections (12a, 12b) adjoining one another, **characterized in that** successive sections (12a, 12b) alternately have a relatively large groove width and a relatively small groove width.

2. Vehicle tyre according to Claim 1, **characterized in that**
successive sections (12a, 12b) are arranged at an angle (α) of 145 to 175° to one another.

3. Vehicle tyre according to either of Claims 1 and 2, **characterized in that**
the individual sections (12a, 12b) have a length (L) of 10 to 60 millimetres.

4. Vehicle tyre according to one of Claims 1 to 3, **characterized in that**
the radially outer region (12) is situated radially inwardly of the starting tread (1) of the unworn vehicle tyre, and, from the starting tread (1) to the radially outer region (12), provision is made of a run-in profiling (11) which is of V-shaped form in cross section and which opens out into the radially outer region (12).

5. Vehicle tyre according to one of Claims 1 to 4, **characterized in that**,
as seen in cross section, the radially inner region (13) is of trough-shaped or vase-shaped form and extends in a straight manner in the circumferential direction (U).

## Revendications

1. Pneu de véhicule comprenant une bande de roulement (1) réalisée radialement du côté extérieur et de manière circonférentielle dans une direction circonférentielle (U) du pneu de véhicule et des rainures circonférentielles (10) ménagées dans la bande de roulement (1) dans la direction circonférentielle (U), lesquelles présentent, considérées en section transversale, une région (12) radialement extérieure et une région (13) radialement intérieure adjacente à celle-ci, la largeur de rainure (B1) étant conçue de manière à être plus petite dans la région (12) radialement extérieure que dans la région (13) radialement intérieure, la région (12) radialement intérieure présentant, considérée dans la direction circonférentielle (U), une allure en forme de zigzag constituée de tronçons (12a, 12b) mutuellement adjacents, **caractérisé en ce que** des tronçons (12a, 12b) successifs présentent en alternance une largeur de rainure plus grande et une largeur de rainure plus petite.

2. Pneu de véhicule selon la revendication 1, **caractérisé en ce que** des tronçons (12a, 12b) successifs sont disposés l'un par rapport à l'autre suivant un angle (α) de 145 à 175 °.

3. Pneu de véhicule selon l'une des revendications 1 ou 2, **caractérisé en ce que** les tronçons (12a, 12b) individuels présentent une longueur (L) de 10 à 60 millimètres.

4. Pneu de véhicule selon l'une des revendications 1 à 3, **caractérisé en ce que** la région (12) radialement extérieure se trouve radialement à l'intérieur de la bande de roulement (1) initiale du pneu de véhicule non usé et, à partir de la bande de roulement (1) initiale jusqu'à la région (12) radialement extérieure, est prévu un profilage d'entrée (11) réalisé en forme de V en section transversale et débouchant dans la région (12) radialement extérieure.

5. Pneu de véhicule selon l'une des revendications 1 à 4, **caractérisé en ce que** la région (13) radialement intérieure, considérée en section transversale, est réalisée en forme de bac ou de vase et s'étend de manière rectiligne dans la direction circonférentielle (U).
